(19) Europäisches Patentamt

European Patent Office

Office européen des brevets

(11) Publication number: **0 306 214 B1**

(12) **EUROPEAN PATENT SPECIFICATION**

(45) Date of publication of patent specification: **17.03.93**

(51) Int. Cl.5: **C01G 19/00**, C01B 33/20, B01J 20/00, C10K 1/32

(21) Application number: **88307878.4**

(22) Date of filing: **25.08.88**

(54) **Novel stannosilicates and preparation and use thereof.**

(30) Priority: **01.09.87 US 91657**

(43) Date of publication of application:
**08.03.89 Bulletin 89/10**

(45) Publication of the grant of the patent:
**17.03.93 Bulletin 93/11**

(84) Designated Contracting States:
**DE FR GB NL**

(56) References cited:
**EP-B- 0 027 736**

(73) Proprietor: **EXXON RESEARCH AND ENGINEERING COMPANY**
**P.O.Box 390, 180 Park Avenue**
**Florham Park, New Jersey 07932(US)**

(72) Inventor: **Corcoran, Edward William, Jr.**
**2149 Stockermill Road**
**Easton Pennsylvania 18042(US)**
Inventor: **Eberly, Paul Earl, Jr.**
**9440 Ventura Drive**
**Baton Rouge Louisiana 70815(US)**
Inventor: **Vaughan, David Evan William**
**Box 596, R.D. 5**
**Flemington New Jersey 08822(US)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Field of the Invention

This invention relates to novel class of highly crystalline stannosilicate materials and the preparation thereof. These novel materials are useful as catalysts, catalyst supports, sorbents, e.g., for the separation of hydrogen sulfide from gas streams containing hydrogen sulfides and hydrogen and/or hydrocarbons.

Background of the Invention

The extensive research and development into alumino-silicates has been highly successful and studies have turned to other materials that might lead to similar types of structures. While frame works containing both octahedral and tetrahedral sites are unknown for zeolites there is some literature suggesting that tin occupies an octahedral position in a mixed oxide structure. See, for example, (Semenov, E.I.; Gerassimovsky, V.I.; Maksimova, N.V.; Andersen, S.; Petersen, O.V. Meddelelser Om Gronland 1965, 181, 1), eakerite (Leavens, P.B.; White, J.S., Jr. Miner, rec. 1970, Fall, 92 and Kossiakoff, A.A.; Leavens, P.B. Amer. Miner. 1976, 61, 956), tin sphene (Hund, F. US Pat. 3,753,754 (1973) and Eppler, R.A. J. Am. Cer. Soc. 1976, 59, 455), and a discussion of tin containing ores (Nekrasov, I.Y. Zakonomer. Razmeshcheniya Polez. Iskop. 1973, 10, 183). Higgins, J.B.; Ross, F.K. Cryst. Struct. Comm. 1977, 6, 179.
Higgins, J.B.; Ribbe, P.H. Amer. Miner. 1977, 62, 801. Takenouchi, S. Mineral. Deposita (Berl.) 1971, 6, 335.
White, J.S., Jr.; Arem, J.E.; Nelen, J.A.; Leavens, P.B.; Thomssen, R.W. Miner. Rec. 1973, March-April, 73.
Rudenko, V.N.; Rozhdestvenskaya, I.V.; Nekrasov, I.Y.; Dadze, T.P. Mineral. Zh. 1983, 5, 70.
Larsen, F.K.; Christensen, A.N.; Rasmussen, S.E. Acta Chem. Scand. 1967, 21, 1281.
Zayakina, N.V.; Rozhdestvenskaya, I.V.; Nekrasov, I.Y.; Dadze, T.P. Dokl. Akad. Nauk SSSR 1980, 254, 353.
Safronov, A.N.; Nevskii, N.N.; Ilyukhin, V.V.; Belov, N.V. Dokl, Akad. Nauk SSSR 1980, 255, 1114.
Safronov, A.N.; Nevskii, N.N.; Ilyukhin, V.V.; Belov, N.V. Dokl. Akad. Nauk SSSR 1983, 269, 850.
Rozhdestvenskaya, I.V.; Zayakina, N.V.; Nekrasov, I.Y. Mineral. Zh. 1985, 7, 78.
Gorokhovskii, V.V.; Krogius, E.A.; Vlasov, V.V.; Dashkevich, T.V. Izv. Akad. Nauk SSSR, Neorg. Mater. 1971, 7, 2033.
Nekrasov, I.Y. Dokl, Akad. Nauk SSSR 1973, 212, 705.
Nekrasov, I.Y.; Dadze, T.P.; Boronikhin, V.A.; Rudnitskaya, E.S. Dokl. Akad. Nauk SSSR 1977, 232, 909.
Nekrasov, I.A.; Dadze, T.P. Ocherki Fiz.-Khim. Petrol. 1978, 8, 193.
Nekrasov, I.Y.; Dadze, T.P. Dokl. Akad. Nauk SSSR 1978, 243, 1286.
Nekrasov, I.Y.; Dadze, T.P.; Zayakina, N.V. Dokl. Akad. Nauk SSSR 1981, 261, 479.
McAnespie, P.; Dyer, A.; Mehta, B.J. US Pat 4,329,328 (1982).
Desai, G.T.; Baxi, D.R. Indian J. Tech. 1978, 16, 201.
EP-B-0027736 and its United States' counterpart, US-A-4329328 describes and claims:
(a) a method of synthesising a sodium zincosilicate, which optionally thereafter is ion-exchanged to replace sodium cations by hydrogen, or inorganic or organic cations, characterized in that the method comprises mixing an aqueous sodium zincate solution of concentration at least 0.5 M (in ZnO) with a source of silica in the molar ratio silica (as $SiO_2$):sodium zincate (as ZnO) of 3.3:1 to 1:5.5 and maintaining the mixture at a reaction temperature of from 15°C to 100°C for at least 15 minutes, allowing a precipitate to form and removing supernatant liquid therefrom and drying the sodium zincosilicate residue; and also
(b) a method of synthesising a sodium stannosilicate which optionally thereafter is ion-exchanged to replace sodium cations by hydrogen or inorganic or organic cations, characterised in that the method comprises mixing an aqueous sodium stannate solution of concentration at least 0.5 M (in $SnO_2$) with a source of silica in the molar ratio silica (as $SiO_2$): sodium stannate (as $SnO_2$) of 3.3:1 to 1:5.5 and maintaining the mixture at a reaction temperature of from 15°C to 100°C for at least 15 minutes, allowing a precipitate to form and removing supernatant liquid therefrom and drying the sodium stannosilicate residue.
The molar ratio $SiO_2$:ZnO or $SiO_2$:$SnO_2$ may be from 1:3.5 to 1:5.5, and the mixture may be maintained at the reaction temperature for up to 24 hours.
EP-B-0027736 also describes and claims sodium zincosilicate or stannosilicate which is capable of preferentially taking up magnesium in the presence of calcium and which has been synthesised by the said methods.
The present invention provides novel, highly crystalline stannosilicates having the generic formula:

$xM_2O \cdot SnO_2 \cdot 4\pm0.5SiO_2 \cdot yH_2O \cdot zR$

wherein M may be $NH_4$ or any Group IA or, where $M_2O$ becomes MO, Group IIA metal, or a quaternary amine, e.g., tetraethylamine.

x is 1.5 to 4, y is 4 to 15,

R is an amine,

and z is 0 to 4

are prepared by reacting a base, that is, ammonia or a Group IA or Group IIA metal (e.g., sodium, potassium, cesium, rubidium, magnesium, calcium, strontium) hydroxide or quaternary amine with a water soluble tin salt, e.g., chlorides, nitrates, sulfates or salts derived from dissolving tin oxide in an acid or base, and silica or a source of silica in an aqueous medium at conditions leading to the formation of these novel crystalline materials.

Description of the Drawings

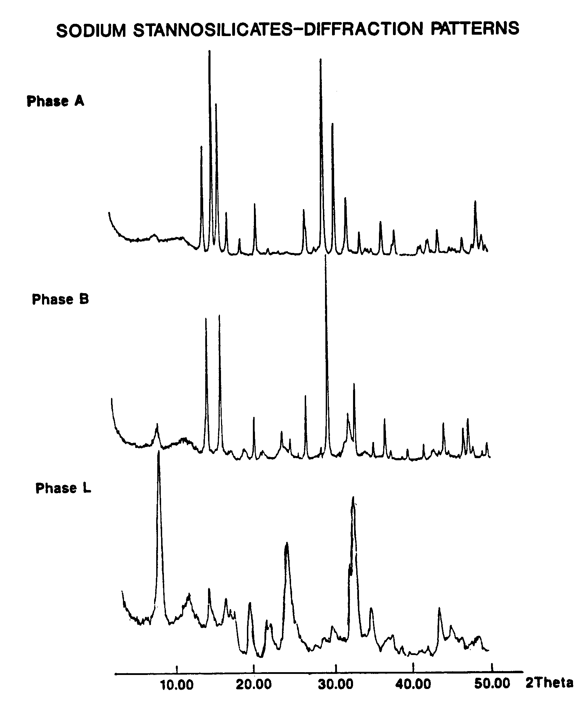

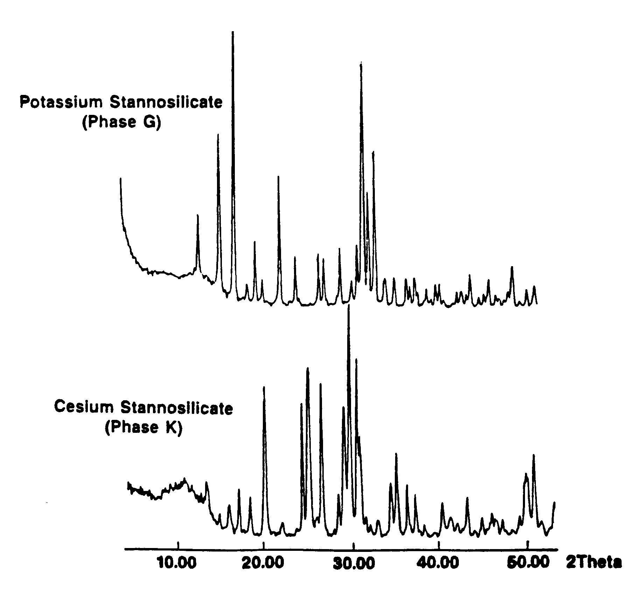

Figure 1 depicts the X-ray diffraction pattern for phases A, B, L, G and K.

Of the metal salts reacted with silica and the tin salt, the alkali metals: lithium, sodium, potassium, rubidium and cesium are preferred. Particularly preferred are sodium and potassium or mixtures thereof.

The reaction generally occurs under autogenous pressure at temperatures above about 100°C and below about 250°C, preferably 150-225°C.

The reactants generally combine to form a gel-like substance and crystallization occurs at reaction temperatures for a period of a few days to several weeks. e.g., seven days to eight weeks. After the appropriate time period, the reaction is quenched, the crystalline powder is recovered by, for example, filtration, and thoroughly washed and dried. Drying can be accomplished by an overnight heating at about 100°C. Impurities can be removed by an acid treatment, e.g., 1N HCl.

Thermal dehydration at, for example, 300°C will drive off water and the x-ray diffraction pattern will change slightly to show a contraction of the lattice, or movement of cations, or both. In adsorbent or catalytic processes the stannosilicate is usually dried or calcined to remove pore filling water cations or amine and in the generic formula shown above, y or z or both may then be zero.

The following examples will further illustrate this invention.

Reactant grade stannous chloride pentahydrate and anhydrous stannic chloride were used without further purification. Colloidal silica (Ludox HS-40) was obtained from DuPont and fumed silica (Cabosil) was obtained from Cabot Corp. All reactions were carried out hydrothermally in 75ml stainless steel autoclaves under autogenous pressures. Powder x-ray diffraction measurements were conducted on a Siemens D500 powder diffractometer using a Siemens DIFFRAC-5 data system.

Reactants were thoroughly mixed at room temperature according to the ratio 2-8 $M_2O:SnO_2$: 4-20 $SiO_2:80$-180 $H_2O$ where M = $NH_4$, Na, K, Cs, Li, Rb, or a quarternary amine such as alkyl ($C_1$-$C_4$) quaternary ammonium mixtures of two or more cations. The resulting gel was then reacted at a temperature between 150°C and 250°C for period lasting between one week and two months. At the end of this time the autoclave was cooled to room temperature and the solid product separated by filtration. The crystalline powder was then washed repeatedly with water and dried at 100°C. The following are representatives of typical syntheses in the sodium stannosilicate system.

EXAMPLE 1

Sodium stannosilicate (phase A). A 14.9g quantity of sodium hydroxide was dissolved in 20.0g distilled water and added slowly, with mixing, to 27.4g HS-40 (40% colloidal silica in water). A second solution was prepared by dissolving 16.0g of stannous chloride pentahydrate in 20.0g distilled water. The two solutions were combined slowly, thoroughly mixed, and distilled water added to make a total weight of 100g. This corresponded to a reaction ratio of $2Na_2O:SnO_2:4SiO_2:80H_2O$. The gel was divided between four 75ml autoclaves which were sealed and kept at 200°C for 24 days. At the end of this period the rection vessels were quenched, the white solid removed by filtration, washed repeatedly with water, and dried at 100°C overnight. Powder x-ray diffraction indicated that a single, highly crystalline phase was produced as shown in Table 1A. Thermal dehydration of this compound at 300°C resulted in a phase which exhibited a different powder pattern by x-ray analysis (Table 1).

Minor impurities which sometimes occurred in this material were removed by stirring in 1N HCl for two hours at room temperature followed by filtration and repeated washing with water. This resulted in slightly sharper lines in the x-ray powder pattern with little or no loss of crystallinity.

TABLE 1

| Phase A | | |
|---|---|---|
| 2 theta | dobsv | I/Io |
| 13.97 | 6.33 | 29 |
| 15.17 | 5.83 | 100 |
| 15.94 | 5.56 | 42 |
| 17.08 | 5.19 | 12 |
| 18.73 | 4.73 | 8 |
| 20.73 | 4.28 | 18 |
| 26.97 | 3.30 | 23 |
| 29.30 | 3.05 | 73 |
| 30.72 | 2.91 | 69 |
| 32.25 | 2.77 | 27 |
| 33.92 | 2.64 | 11 |
| 36.68 | 2.45 | 15 |
| 38.31 | 2.35 | 9 |

EXAMPLE 2

Sodium Stannosilicate (phase B). Sodium hydroxide (14.9g) was dissolved in 25.0g distilled water and 11.0g of fumed silica was added. Separately, 16.0g stannous chloride pentahydrate was dissolved in 25.0g distilled water. The two solutions were combined, water added to make 100g total weight, and the gel mixed thoroughly. This corresponded to the reaction ratio in the preceding examples, $2Na_2O:SnO_2:4SiO_2:80H_2O$. Crystallization at 200°C for 17 days followed by workup as previously described yielded a crystalline structurally unique phase, as shown by the x-ray diffraction pattern in Table 2.

TABLE 2

| Phase B | | |
|---|---|---|
| 2 theta | dobsv | I/Io |
| 14.17 | 6.25 | 74 |
| 15.86 | 5.59 | 70 |
| 20.11 | 4.41 | 22 |
| 23.65 | 3.76 | 13 |
| 24.71 | 3.60 | 8 |
| 26.74 | 3.33 | 26 |
| 28.66 | 3.11 | 6 |
| 29.52 | 3.02 | 100 |
| 32.91 | 2.72 | 40 |
| 35.25 | 2.54 | 10 |
| 36.74 | 2.44 | 19 |
| 37.48 | 2.40 | 5 |
| 39.58 | 2.28 | 6 |
| 41.61 | 2.17 | 8 |
| 44.17 | 2.05 | 21 |
| 46.64 | 1.95 | 19 |
| 47.24 | 1.92 | 17 |
| 47.82 | 1.90 | 7 |
| 49.58 | 1.84 | 12 |

This phase can also be synthesized in a higher purity form using a mixture of two cations with the reaction ratio of $Na_2O:Li_2O:SnO_2:4SiO_2:80H_2O$. The reactants were mixed, as above, and the gel reacted at 200°C for 16 days yielding phase B.

EXAMPLE 3

Sodium stannosilicate (phase L). A 21.1g sample of sodium hydroxide was dissolved in 10.0g distilled water; 12.8g stannous chloride pentahydrate was added. This solution was combined with 54.9g HS-40, water added to make 100g total weight, and the resulted gel thoroughly mixed. This mixture corresponded to a reaction ratio of $5Na_2O:SnO_2:10SiO_2:80H_2O$. Crystallization at 200°C for 6 weeks followed by workup as above produced a layered phase as indicated by powder x-ray diffraction shown in Table 3.

TABLE 3

| Phase L | | |
|---|---|---|
| 2 theta | dobsv | I/Io |
| 7.95 | 11.12 | 96 |
| 16.11 | 5.50 | 15 |
| 17.21 | 5.15 | 21 |
| 19.10 | 4.64 | 39 |
| 21.14 | 4.20 | 18 |
| 23.95 | 3.71 | 83 |
| 29.44 | 3.03 | 18 |
| 31.83 | 2.81 | 27 |
| 32.36 | 2.76 | 100 |
| 34.45 | 2.60 | 27 |
| 42.91 | 2.11 | 27 |
| 44.28 | 2.04 | 14 |

EXAMPLE 4

Potassium Stannosilicate (phase G). A 22.5g quantity of potassium hydroxide was dissolved in 10.0g of distilled water and added slowly to 25.9g HS-40 (40% colloidal silica). A second solution was prepared from 20.0g water and 15.1g stannous chloride. The two solutions were combined to make a gel which was thoroughly mixed; water was added to make 100g total weight. This corresponded to a reaction ratio of $2K_2O:SnO_2:4SiO_2:80H_2O$. The mixture was reacted at 175°C for 7 days followed by workup as described above to give a crystalline phase with a distinctive diffraction pattern, as shown in Table 4.

TABLE 4

| Phase G | | |
|---|---|---|
| 2 theta | dobsv | I/Io |
| 10.98 | 8.05 | 17 |
| 13.44 | 6.58 | 59 |
| 15.11 | 5.86 | 76 |
| 16.56 | 5.35 | 8 |
| 17.51 | 5.06 | 18 |
| 18.32 | 4.84 | 7 |
| 20.30 | 4.37 | 40 |
| 22.10 | 4.02 | 13 |
| 24.81 | 3.59 | 18 |
| 25.38 | 3.51 | 16 |
| 27.28 | 3.27 | 17 |
| 28.57 | 3.12 | 8 |
| 29.24 | 3.05 | 19 |
| 29.92 | 2.98 | 100 |
| 30.54 | 2.93 | 38 |
| 31.28 | 2.86 | 53 |
| 32.49 | 2.75 | 12 |
| 33.51 | 2.67 | 14 |
| 34.89 | 2.57 | 10 |
| 35.87 | 2.50 | 12 |
| 37.22 | 2.41 | 9 |
| 42.23 | 2.14 | 14 |
| 44.37 | 2.04 | 12 |
| 47.09 | 1.93 | 19 |
| 49.60 | 1.84 | 10 |

EXAMPLE 5

Cesium Stannosilicate (phase K). A 71.6g sample of 50% aqueous cesium hydroxide was added to 17.9g HS-40 (40% colloidal Silica); 10.5g of stannous chloride was slowly added to this mixture and dissolved completely (no gel formed). This mixture corresponded to a reaction ratio of $2Cs_2O:SnO_2:4SiO_2:95H_2O$. Crystallization at 200°C for 3 weeks followed by workup as described above yielded a biphasic material as observed by powder x-ray diffraction, as shown in Table 5.

TABLE 5

| Phase K | | |
|---|---|---|
| 2 theta | dobsv | I/Io |
| 15.87 | 5.58 | 14 |
| 17.04 | 5.20 | 20 |
| 18.28 | 4.85 | 21 |
| 19.99 | 4.44 | 67 |
| 24.28 | 3.66 | 39 |
| 25.01 | 3.56 | 99 |
| 26.51 | 3.36 | 56 |
| 28.41 | 3.14 | 12 |
| 29.11 | 3.07 | 66 |
| 29.78 | 3.00 | 100 |
| 30.57 | 2.92 | 51 |
| 31.53 | 2.84 | 9 |
| 34.42 | 2.60 | 23 |
| 35.09 | 2.56 | 39 |
| 36.27 | 2.48 | 23 |
| 37.21 | 2.41 | 23 |
| 40.29 | 2.24 | 17 |
| 43.11 | 2.10 | 19 |
| 46.35 | 1.96 | 14 |
| 49.74 | 1.83 | 22 |
| 49.94 | 1.83 | 18 |

The alkali-metal:tin:silica reaction system was found to yield a new class of crystalline, microporous materials containing only tin, silicon, and oxygen as framework species. The phases generated in this system appear to be new structure types, display reversible water loss, and are capable of ion exchange.

The novel stannosilicates of this invention have a variety of uses, e.g., because the alkali metal can be exchanged as in a zeolite material, nuclear waste clean up can be effected when M in the generic formula is radioactive cesium or strontium.

A particular utility for the material is as a hydrogen sulfide sorbent. Catalytic reforming reactions, for example, processes utilizing a supported platinum catalyst to upgrade the octane level of naphtha, produce hydrogen which can be recycled to the reaction zone. Because naphtha feeds generally contain low sulfur levels which can build up during recycle processes and cause catalyst deterioration, the recycle hydrogen stream containing some hydrogen sulfide is passed through a sorbent to reduce the sulfide level of the recycle hydrogen.

The sorbent process can be conducted at reforming pressures, e.g., 125 psig to about 600 psig (0.862 to 4.137 MPa gauge), to avoid recompression of the hydrogen and at temperatures ranging from about 50°C to 500°C. Hydrogen flow rates or space velocities, that is, volume of feed per hour per volume of sorbent, are easily determined based on the desired level of hydrogen sulfide removal, usually in excess of about 80%, preferably in excess of about 90%. Similar sorption processes are used to remove $H_2S$ from hydrocarbon streams containing $H_2S$ such as sour natural gas streams, and streams resulting from petrochemical refining operations.

The following example shows the ability of a form of the stannosilicate material to remove hydrogen sulfide from hydrogen streams and, more importantly, the regenerability of the stannosilicate so that it can be used and reused in multicycle fashion. In catalytic reforming operations, it is normal to have two or more beds of hydrogen sulfide sorbent so that the sulfide can be continuously adsorbed in one bed or another while the bed that is off stream is being regenerated. Such processes will be rather obvious to those skilled in the art.

Regeneration of the stannosilicate is readily effected by passing a small amount of hydrogen through the sorbent stannosilicate for several hours, e.g., one hour to 24 hours, while maintaining a positive pressure and at higher temperature than the adsorbing cycle but within the same general temperature range.

## EXAMPLE 6

A stannosilicate prepared in accordance with example 1 above was then exchanged with NH₄ + and loaded into a thermogravimetric analyzer and heated overnight at 650°F (343.3°C) in flowing hydrogen. 10.5% volatile matter, corresponding to 9.45mg of the original 90.01mg charge was lost. The results of several adsorption/desorption cycles are shown in Table 6 and demonstrate the ability of these novel, highly crystalline materials to separate $H_2S$ from $H_2S$-containing streams.

**TABLE 6**

|  |  | TEMP. | TIME | WT. GAIN (LOSS) |
|---|---|---|---|---|
| **Cycle 1** |  |  |  |  |
| sorb | 10% $H_2S/H_2$ | 66°C | 6.5 h | 5.05mg |
| desorb | $H_2$ | 316°C | overnight | (4.80) |
| **Cycle II** |  |  |  |  |
| sorb | 0.2% $H_2S/H_2$ | 66°C | 3.35 h | .60 mg |
| desorb | $H_2$ | 316°C | overnight | (.55) |
| **Cycle III** |  |  |  |  |
| sorb | 0.2% $H_2S/H_2$ | 66°C | 2.35 h | .36 mg |
| desorb | $H_2$ | 316°C | overnight | (.37) |
| **Cycle IV** |  |  |  |  |
| sorb | 0.2% $H_2S/H_2$ | 66°C | 6.67 h | .67 mg |
| desorb | $H_2$ | 316°C | overnight | (.67) |
| **Cycle V** |  |  |  |  |
| sorb | 0.2 $H_2S/H_2$ | 66°C | 7.5 h | 0.86 mg |
| desorb | $H_2$ | – | – | – |

Table 10, below, shows a variety of stannosilicate compositions, most of which are in accordance with this invention, items noted with an asterisk resulted either in an amorphous structure or a quartz structure and are not part of this invention. In Table 10, sl is slight, TEA is triethanolamine and examples 1-5 are noted.

While the preparations shown in Table 10 are similar to the previous examples, in some instances the mixture was cold aged for a short period to promote nucleation and then held at reaction temperature for the requisite time period. In another instance a small amount of $Al_2O_3$ was added for the same purpose.

## Claims

1. A highly crystalline stannosilicate of the formula

### TABLE 10

| M | $H_2O$: | $SnO_2$: | $SiO_2$: | $H_2O$ | Reactant source and additional comments | Days | Temp. °C | Phase |
|---|---|---|---|---|---|---|---|---|
| Na (ex 1) | 2 | 1 | 4 | 80 | colloidal silica, $SnCl_4 \cdot 5H_2O$ | 21 | 200 | A(some L) |
| Na (ex 2) | 2 | 1 | 4 | 80 | fumed silica, $SnCl_4 \cdot 5H_2O$ | 21 | 200 | B, A, L |
| Na | 2 | 1 | 4 | 80 | $Na_2SnO_3$, colloidal silica | 21 | 200 | A(good) |
| Na | 2 | 1 | 4 | 80 | colloidal silica, $SnCl_4 \cdot 5H_2O$, cold age | 21 | 200 | B(some L) |
| Na | 2 | 1 | 4 | 80 | colloidal silica, $SnCl_4 \cdot 5H_2O$, agitation | 21 | 180 | B(some L init.) |
| Na | 2 | 1 | 4 | 80 | colloidal silica, $SnCl_4 \cdot 5H_2O$, sl. $Al_2O_3$ or seeds | 7-28 | 200 | B |
| Na | 2 | 1 | 4 | 80 | colloidal silica, $SnCl_4 \cdot 5H_2O$, TEA | 21 | 180-200 | A(some L) |
| Na | 2 | 1 | 4 | 80 | $SnCl_4 \cdot 5H_2O$ | 21 | 200 | L and A |
| Na | 2 | 1 | 4 | 80 | $SnCl_4 \cdot 5H_2O$, TEA | 14 | 200 | L |
| Na | 2 | 1 | 4 | 80 | $SnCl_4 \cdot 5H_2O$, TEA | 14 | 180 | L(some B) |
| Na *(Note 1) | 4-8 | 1 | 4 | 80 | $SnCl_4 \cdot 5H_2O$ | 14 | 150 | amorphous |
| Na *(Note 2) | 2 | 1 | 16 | 80 | colloidal silica, $SnCl_4 \cdot 5H_2O$ | 21 | 200 | amorphous |
| Na | 2.2 | 1 | 4 | 80 | $Na_2SnO_3$ | 21 | 150 | L |
| Na | 2.2 | 1 | 4 | 80 | $Na_2SnO_3$ | 21 | 200 | A(some L) |
| Na | 3 | 1 | 6 | 80 | $Na_2SnO_3$ | 25 | 200 | L |
| Na | 6 | 1 | 4 | 80 | $Na_2SnO_3$ | 28 | 150 | L |
| Na (ex 3) | 5 | 1 | 10 | 80 | colloidal silica, $SnCl_4 \cdot 5H_2O$ | 14-60 | 150-200 | L(good) |
| Na *(Note 3) | 2-5 | 1 | 20 | 110-125 | colloidal silica, $SnCl_4 \cdot 5H_2O$ | 30 | 200 | quartz |
| Na | 4 | 1 | 4 | 80 | colloidal silica, $SnCl_4 \cdot 5H_2O$ | 30 | 200 | L |
| 1:1 Na:Li (ex 2) | 2 | 1 | 4 | 80 | colloidal silica, $SnCl_4 \cdot 5H_2O$ | 30 | 150-200 | B(good) |
| 1:1 Na:K | 2 | 1 | 4 | 80 | colloidal silica, $SnCl_4 \cdot 5H_2O$ | 7 | 150 | A |
| 1:1 Na:K | 2 | 1 | 4 | 80 | colloidal silica, $SnCl_4 \cdot 5H_2O$ | 7 | 200 | A and L |
| K (ex 4) | 2 | 1 | 4 | 80 | colloidal silica, $SnCl_4 \cdot 5H_2O$ | 5-30 | 150-200 | G |
| K | 5 | 1 | 10 | 80 | colloidal silica, $SnCl_4 \cdot 5H_2O$ | 3-30 | 150-200 | G |
| Ca (ex 5) | 2 | 1 | 4 | 95 | colloidal silica, $SnCl_4 \cdot 5H_2O$ | 30 | 200 | K |
| Ca | 5 | 1 | 10 | 180 | colloidal silica, $SnCl_4 \cdot 5H_2O$ | 17-30 | 200 | O |
| Rb | 2 | 1 | 4 | 80 | colloidal silica, $SnCl_4 \cdot 5H_2O$ | 17 | 200 | N |
| Li | 2 | 1 | 4 | 80 | colloidal silica, $SnCl_4 \cdot 5H_2O$ | 60 | 200 | M |

Notes: (1) base concentration too high relative to $SiO_2$.
(2) $SiO_2$ concentration too high relative to other components.
(3) $SiO_2$ concentration too high relative to base concentration.

$xM_2O.SnO_2.4\pm0.5SiO_2.yH_2O.zR$

wherein M is $NH_4$, a Group 1A metal, a Group 11A metal( whereupon $M_2O$ becomes MO), or a quaternary amine;

x is 1.5 to 4;

y is 4 to 15;

R is an amine; and

z is 0 to 4.

2. The composition of claim 1 having the X-ray diffraction pattern one of phases A, B, L, G or K of Tables 1, 2, 3, 4 and 5, respectively, which follow :

TABLE 1

| Phase A | | |
|---|---|---|
| 2 theta | dobsv | I/Io |
| 13.97 | 6.33 | 29 |
| 15.17 | 5.83 | 100 |
| 15.94 | 5.56 | 42 |
| 17.08 | 5.19 | 12 |
| 18.73 | 4.73 | 8 |
| 20.73 | 4.28 | 18 |
| 26.97 | 3.30 | 23 |
| 29.30 | 3.05 | 73 |
| 30.72 | 2.91 | 69 |
| 32.25 | 2.77 | 27 |
| 33.92 | 2.64 | 11 |
| 36.68 | 2.45 | 15 |
| 38.31 | 2.35 | 9 |

TABLE 2

| Phase B | | |
|---|---|---|
| 2 theta | dobsv | I/Io |
| 14.17 | 6.25 | 74 |
| 15.86 | 5.59 | 70 |
| 20.11 | 4.41 | 22 |
| 23.65 | 3.76 | 13 |
| 24.71 | 3.60 | 8 |
| 26.74 | 3.33 | 26 |
| 28.66 | 3.11 | 6 |
| 29.52 | 3.02 | 100 |
| 32.91 | 2.72 | 40 |
| 35.25 | 2.54 | 10 |
| 36.74 | 2.44 | 19 |
| 37.48 | 2.40 | 5 |
| 39.58 | 2.28 | 6 |
| 41.61 | 2.17 | 8 |
| 44.17 | 2.05 | 21 |
| 46.64 | 1.95 | 19 |
| 47.24 | 1.92 | 17 |
| 47.82 | 1.90 | 7 |
| 49.58 | 1.84 | 12 |

TABLE 3

| Phase L | | |
|---|---|---|
| 2 theta | dobsv | I/Io |
| 7.95 | 11.12 | 96 |
| 16.11 | 5.50 | 15 |
| 17.21 | 5.15 | 21 |
| 19.10 | 4.64 | 39 |
| 21.14 | 4.20 | 18 |
| 23.95 | 3.71 | 83 |
| 29.44 | 3.03 | 18 |
| 31.83 | 2.81 | 27 |
| 32.36 | 2.76 | 100 |
| 34.45 | 2.60 | 27 |
| 42.91 | 2.11 | 27 |
| 44.28 | 2.04 | 14 |

TABLE 4

| Phase G | | |
|---|---|---|
| 2 theta | dobsv | I/Io |
| 10.98 | 8.05 | 17 |
| 13.44 | 6.58 | 59 |
| 15.11 | 5.86 | 76 |
| 16.56 | 5.35 | 8 |
| 17.51 | 5.06 | 18 |
| 18.32 | 4.84 | 7 |
| 20.30 | 4.37 | 40 |
| 22.10 | 4.02 | 13 |
| 24.81 | 3.59 | 18 |
| 25.38 | 3.51 | 16 |
| 27.28 | 3.27 | 17 |
| 28.57 | 3.12 | 8 |
| 29.24 | 3.05 | 19 |
| 29.92 | 2.98 | 100 |
| 30.54 | 2.93 | 38 |
| 31.28 | 2.86 | 53 |
| 32.49 | 2.75 | 12 |
| 33.51 | 2.67 | 14 |
| 34.89 | 2.57 | 10 |
| 35.87 | 2.50 | 12 |
| 37.22 | 2.41 | 9 |
| 42.23 | 2.14 | 14 |
| 44.37 | 2.04 | 12 |
| 47.09 | 1.93 | 19 |
| 49.60 | 1.84 | 10 |

TABLE 5

| Phase K | | |
|---|---|---|
| 2 theta | dobsv | I/Io |
| 15.87 | 5.58 | 14 |
| 17.04 | 5.20 | 20 |
| 18.28 | 4.85 | 21 |
| 19.99 | 4.44 | 67 |
| 24.28 | 3.66 | 39 |
| 25.01 | 3.56 | 99 |
| 26.51 | 3.36 | 56 |
| 28.41 | 3.14 | 12 |
| 29.11 | 3.07 | 66 |
| 29.78 | 3.00 | 100 |
| 30.57 | 2.92 | 51 |
| 31.53 | 2.84 | 9 |
| 34.42 | 2.60 | 23 |
| 35.09 | 2.56 | 39 |
| 36.27 | 2.48 | 23 |
| 37.21 | 2.41 | 23 |
| 40.29 | 2.24 | 17 |
| 43.11 | 2.10 | 19 |
| 46.35 | 1.96 | 14 |
| 49.74 | 1.83 | 22 |
| 49.94 | 1.83 | 18 |

3. A process for preparing crystalline stannosilicates according to claim 1 or claim 2 which comprises reacting a water-soluble tin salt, a source of silica, and ammonia or a Group IA or Group IIA metal hydroxide or quaternary amine in an aqueous medium to form a reaction mixture having a composition : 2-8 $M_2O$:$SnO_2$:4-20 $SiO_2$:8-180 $H_2O$ wherein M is selected from $NH_4$, Group IA or IIA metals, or quaternary ammonium cations, ageing the reaction mixture at reacting temperatures until crystallization occurs, and recovering the said crystalline stannosilicate.

4. The process of claim 3 wherein the reaction temperature is in the range of from 100° to 250°C.

5. The process of claim 3 or claim 4 wherein the crystalline stannosilicate is treated with an acid.

6. The process of any one of claims 3 to 5 wherein the crystalline stannosilicate is dried to remove water contained therein.

7. A process for removing $H_2S$ from a feed stream containing $H_2S$ and hydrocarbons and/or $H_2S$ and hydrogen, or from a stream resulting from petrochemical refining operations, which comprises contacting the stream with a crystalline stannosilicate of the general formula

$xM_2O.SnO_2.4\pm O.5SiO_2.yH_2O.zR$

x is 1.5 to 4;
y is 4 to 15;
R is an amine; and
z is O to 4,
and which crystalline stannosilicate is either in accordance with claim 1 or claim 2 or is made by the process of any one of claims 3 to 6, and recovering a stream depleted in $H_2S$.

8. The process of claim 7 conducted at temperatures in the range of from about 50° to about 500°C.

9. The process of claim 7 or claim 8 wherein the stannosilicate is dried prior to contact with the feed stream.

10. The process of claim 9 wherein the stannosilicate is dried in situ.

11. The process of any one of claims 7 to 10 wherein the stannosilicate containing $H_2S$ is regenerated by purging with hydrogen.

**Patentansprüche**

1. Hochkristallines Stannosilikat der Formel

$$x\ M_2O \cdot SnO_2 \cdot 4 \pm 0,5\ SiO_2 \cdot y\ H_2O \cdot z\ R,$$

in der M $NH_4$, ein Metall der Gruppe IA, ein Metall der Gruppe IIA (woraufhin $M_2O$ zu MO wird) oder ein quaternäres Amin ist,
    x 1,5 bis 4 ist,
    y 4 bis 15 ist,
    R ein Amin ist und
    z 0 bis 4 ist.

2. Zusammensetzung nach Anspruch 1 mit dem Röntgenbeugungsspektrum einer der Phasen A, B, L, G oder K der folgenden Tabellen 1, 2, 3, 4 oder 5:

Tabelle 1

| Phase A | | |
|---|---|---|
| 2 Theta | $d_{beob}$ | $I/I_o$ |
| 13,97 | 6,33 | 29 |
| 15,17 | 5,83 | 100 |
| 15,94 | 5,56 | 42 |
| 17,08 | 5,19 | 12 |
| 18,73 | 4,73 | 8 |
| 20,73 | 4,28 | 18 |
| 26,97 | 3,30 | 23 |
| 29,30 | 3,05 | 73 |
| 30,72 | 2,91 | 69 |
| 32,25 | 2,77 | 27 |
| 33,92 | 2,64 | 11 |
| 36,68 | 2,45 | 15 |
| 38,31 | 2,35 | 9 |

Tabelle 2

| Phase B | | |
|---|---|---|
| 2 Theta | $d_{beob}$ | $I/I_o$ |
| 14,17 | 6,25 | 74 |
| 15,86 | 5,59 | 70 |
| 20,11 | 4,41 | 22 |
| 23,65 | 3,76 | 13 |
| 24,71 | 3,60 | 8 |
| 26,74 | 3,33 | 26 |
| 28,66 | 3,11 | 6 |
| 29,52 | 3,02 | 100 |
| 32,91 | 2,72 | 40 |
| 35,25 | 2,54 | 10 |
| 36,74 | 2,44 | 19 |
| 37,48 | 2,40 | 5 |
| 39,58 | 2,28 | 6 |
| 41,61 | 2,17 | 8 |
| 44,17 | 2,05 | 21 |
| 46,64 | 1,95 | 19 |
| 47,24 | 1,92 | 17 |
| 47,82 | 1,90 | 7 |
| 49,58 | 1,84 | 12 |

Tabelle 3

| Phase L | | |
|---|---|---|
| 2 Theta | $d_{beob}$ | $I/I_o$ |
| 7,95 | 11,12 | 96 |
| 16,11 | 5,50 | 15 |
| 17,21 | 5,15 | 21 |
| 19,10 | 4,64 | 39 |
| 21,14 | 4,20 | 18 |
| 23,95 | 3,71 | 83 |
| 29,44 | 3,03 | 18 |
| 31,83 | 2,81 | 27 |
| 32,36 | 2,76 | 100 |
| 34,45 | 2,60 | 27 |
| 42,91 | 2,11 | 27 |
| 44,28 | 2,04 | 14 |

Tabelle 4

| Phase G | | |
|---|---|---|
| 2 Theta | $d_{beob}$ | $I/I_o$ |
| 10,98 | 8,05 | 17 |
| 13,44 | 6,58 | 59 |
| 15,11 | 5,86 | 76 |
| 16,56 | 5,35 | 8 |
| 17,51 | 5,06 | 18 |
| 18,32 | 4,84 | 7 |
| 20,30 | 4,37 | 40 |
| 22,10 | 4,02 | 13 |
| 24,81 | 3,59 | 18 |
| 25,38 | 3,51 | 16 |
| 27,28 | 3,27 | 17 |
| 28,57 | 3,12 | 8 |
| 29,24 | 3,05 | 19 |
| 29,92 | 2,98 | 100 |
| 30,54 | 2,93 | 38 |
| 31,28 | 2,86 | 53 |
| 32,49 | 2,75 | 12 |
| 33,51 | 2,67 | 14 |
| 34,89 | 2,57 | 10 |
| 35,87 | 2,50 | 12 |
| 37,22 | 2,41 | 9 |
| 42,23 | 2,14 | 14 |
| 44,37 | 2,04 | 12 |
| 47,09 | 1,93 | 19 |
| 49,60 | 1,84 | 10 |

EP 0 306 214 B1

Tabelle 5

| Phase K | | |
|---|---|---|
| 2 Theta | $d_{beob}$ | $I/I_o$ |
| 15,87 | 5,58 | 14 |
| 17,04 | 5,20 | 20 |
| 18,28 | 4,85 | 21 |
| 19,99 | 4,44 | 67 |
| 24,28 | 3,66 | 39 |
| 25,01 | 3,56 | 99 |
| 26,51 | 3,36 | 56 |
| 28,41 | 3,14 | 12 |
| 29,11 | 3,07 | 66 |
| 29,78 | 3,00 | 100 |
| 30,57 | 2,92 | 51 |
| 31,53 | 2,84 | 9 |
| 34,42 | 2,60 | 23 |
| 35,09 | 2,56 | 39 |
| 36,27 | 2,48 | 23 |
| 37,21 | 2,41 | 23 |
| 40,29 | 2,24 | 17 |
| 43,11 | 2,10 | 19 |
| 46,35 | 1,96 | 14 |
| 49,74 | 1,83 | 22 |
| 49,94 | 1,83 | 18 |

3.  Verfahren zur Herstellung kristalliner Stannosilikate gemäß Anspruch 1 oder Anspruch 2, bei dem ein wasserlösliches Zinnsalz, eine Siliciumdioxidquelle und Ammoniumhydroxid, ein Hydroxid eines Metalls der Gruppe IA oder der Gruppe IIA oder ein quaternäres Amin in einem wäßrigen Medium umgesetzt werden, um eine Reaktionsmischung mit einer Zusammensetzung: $2 - 8\ M_2O : SnO_2 : 4 - 20\ SiO_2 : 8 - 180\ H_2O$ zu bilden, wobei M ausgewählt ist aus $NH_4$, Metallen der Gruppe IA oder IIA oder quartären Ammoniumkationen, die Reaktionsmischung bei den Umsetzungstemperaturen gealtert wird, bis Kristallisation auftritt, und das kristalline Stannosilikat gewonnen wird.

4.  Verfahren nach Anspruch 3, bei dem die Reaktionstemperatur im Bereich von 100 bis 250 °C liegt.

5.  Verfahren nach Anspruch 3 oder Anspruch 4, bei dem das kristalline Stannosilikat mit einer Säure behandelt wird.

6.  Verfahren nach einem der Ansprüche 3 bis 5, bei dem das kristalline Stannosilikat getrocknet wird, um das darin enthaltene Wasser zu entfernen.

7.  Verfahren zur Entfernung von $H_2S$ aus einem Einsatzmaterialstrom, der $H_2S$ und Kohlenwasserstoffe und/oder $H_2S$ und Wasserstoff enthält, oder aus einem aus petrochemischen Raffinierungsvorgängen resultierenden Strom, bei dem der Strom mit einem kristallinen Stannosilikat der allgemeinen Formel

$$x\ M_2O \cdot SnO_2 \cdot 4 \pm 0,5\ SiO_2 \cdot Y\ H_2O \cdot z\ R\ ,$$

in der
  x 1,5 bis 4 ist,
  y 4 bis 15 ist,
  R ein Amin ist und
  z 0 bis 4 ist,

kontaktiert wird, wobei das kristalline Stannosilikat entweder ein kristallines Stannosilikat gemäß

17

Anspruch 1 oder Anspruch 2 ist oder nach einem Verfahren gemäß einem der Ansprüche 3 bis 6 hergestellt worden ist, und der an $H_2S$ verarmte Strom gewonnen wird.

8.  Verfahren nach Anspruch 7, das bei einer Temperatur im Bereich von etwa 50 bis etwa 500°C durchgeführt wird.

9.  Verfahren nach Anspruch 7 oder Anspruch 8, bei dem das Stannosilikat vor dem Kontakt mit dem Einsatzmaterialstrom getrocknet wird.

10. Verfahren nach Anspruch 9, bei dem das Stannosilikat in situ getrocknet wird.

11. Verfahren nach einem der Ansprüche 7 bis 10, bei dem das $H_2S$ enthaltende Stannosilikat durch Spülen mit Wasserstoff regeneriert wird.

**Revendications**

1.  Stannosilicate hautement cristallin, de formule

    $xM_2O . SnO_2 . 4 \pm 0,5 SiO_2 . yH_2O . zR$

    dans laquelle M représente $NH_4$, un métal du groupe 1A, un métal du groupe IIa ($M_2O$ devenant alors MO), ou une amine quaternaire;
    x vaut 1,5 à 4;
    y vaut 4 à 15;
    R est une amine; et
    z vaut 0 à 4.

2.  Composition selon la revendication 1, ayant dans son spectre de diffraction des rayons X l'une des phases A, B, L, G ou K des tableaux 1, 2, 3, 4 et 5, respectivement, qui suivent:

TABLEAU 1

| Phase A | | |
|---|---|---|
| 2 theta | dobsv | I/Io |
| 13,97 | 6,33 | 29 |
| 15,17 | 5,83 | 100 |
| 15,94 | 5,56 | 42 |
| 17,08 | 5,19 | 12 |
| 18,73 | 4,73 | 8 |
| 20,73 | 4,28 | 18 |
| 26,97 | 3,30 | 23 |
| 29,30 | 3,05 | 73 |
| 30,72 | 2,91 | 69 |
| 32,25 | 2,77 | 27 |
| 33,92 | 2,64 | 11 |
| 36,68 | 2,45 | 15 |
| 38,31 | 2,35 | 9 |

TABLEAU 2

| Phase B | | |
|---|---|---|
| 2 theta | dobsv | I/Io |
| 14,17 | 6,25 | 74 |
| 15,86 | 5,59 | 70 |
| 20 11 | 4,41 | 22 |
| 23,65 | 3,76 | 13 |
| 24,71 | 3,60 | 8 |
| 26,74 | 3,33 | 26 |
| 28,66 | 3,11 | 6 |
| 29,52 | 3,02 | 100 |
| 32,91 | 2,72 | 40 |
| 35,25 | 2,54 | 10 |
| 36,74 | 2,44 | 19 |
| 37,48 | 2,40 | 5 |
| 39,58 | 2,28 | 6 |
| 41,61 | 2,17 | 8 |
| 44,17 | 2,05 | 21 |
| 46,64 | 1,95 | 19 |
| 47,24 | 1,92 | 17 |
| 47,82 | 1,90 | 7 |
| 49,58 | 1,84 | 12 |

TABLEAU 3

| Phase L | | |
|---|---|---|
| 2 theta | dobsv | I/Io |
| 7,95 | 11,12 | 96 |
| 16,11 | 5,50 | 15 |
| 17,21 | 5,15 | 21 |
| 19,10 | 4,64 | 39 |
| 21,14 | 4,20 | 18 |
| 23,95 | 3,71 | 83 |
| 29,44 | 3,03 | 18 |
| 31,83 | 2,81 | 27 |
| 32,36 | 2,76 | 100 |
| 34,45 | 2,60 | 27 |
| 42,91 | 2,11 | 27 |
| 44,28 | 2,04 | 14 |

TABLEAU 4

| Phase G | | |
|---|---|---|
| 2 theta | dobsv | I/Io |
| 10,98 | 8,05 | 17 |
| 13,44 | 6,58 | 59 |
| 15,11 | 5,86 | 76 |
| 16,56 | 5,35 | 8 |
| 17,51 | 5,06 | 18 |
| 18,32 | 4,84 | 7 |
| 20,30 | 4,37 | 40 |
| 22,10 | 4,02 | 13 |
| 24,81 | 3,59 | 18 |
| 25,38 | 3,51 | 16 |
| 27,28 | 3,27 | 17 |
| 28,57 | 3,12 | 8 |
| 29,24 | 3,05 | 19 |
| 29,92 | 2,98 | 100 |
| 30,54 | 2,93 | 38 |
| 31,28 | 2,86 | 53 |
| 32,49 | 2,75 | 12 |
| 33,51 | 2,67 | 14 |
| 34,89 | 2,57 | 10 |
| 35,87 | 2,50 | 12 |
| 37,22 | 2,41 | 9 |
| 42,23 | 2,14 | 14 |
| 44,37 | 2,04 | 12 |
| 47,09 | 1,93 | 19 |
| 49,60 | 1,84 | 10 |

TABLEAU 5

| Phase K | | |
|---|---|---|
| 2 theta | dobsv | I/Io |
| 15,87 | 5,58 | 14 |
| 17,04 | 5,20 | 20 |
| 18,28 | 4,85 | 21 |
| 19,99 | 4,44 | 67 |
| 24,28 | 3,66 | 39 |
| 25,01 | 3,56 | 99 |
| 26,51 | 3,36 | 56 |
| 28,41 | 3,14 | 12 |
| 29,11 | 3,07 | 66 |
| 29,78 | 3,00 | 100 |
| 30,57 | 2,92 | 51 |
| 31,53 | 2,84 | 9 |
| 34,42 | 2,60 | 23 |
| 35,09 | 2,56 | 39 |
| 36,27 | 2,48 | 23 |
| 37,21 | 2,41 | 23 |
| 40,29 | 2,24 | 17 |
| 43,11 | 2,10 | 19 |
| 46,35 | 1,96 | 14 |
| 49,74 | 1,83 | 22 |
| 49,94 | 1,83 | 18 |

3. Procédé pour préparer des stannosilicates selon la revendication 1 ou la revendication 2, qui comprend la réaction d'un sel hydrosoluble d'étain, d'une source de silice et d'ammoniac ou d'un hydroxyde de métal du groupe IA ou du groupe IIA ou d'une amine quaternaire dans un milieu aqueux pour former un mélange réactionnel ayant pour composition:

2-8 $M_2O$ : $SnO_2$ : 4-20 $SiO_2$ : 8-180 $H_2O$

dans laquelle M est choisi parmi $NH_4$, des métaux du groupe IA ou IIA, ou des cations ammoniums quaternaires, le vieillissement du mélange réactionnel aux températures de réaction jusqu'à ce qu'une cristallisation se produise, et la récupération dudit stannosilicate cristallin.

4. Procédé selon la revendication 3, dans lequel la température de réaction se situe entre 100° et 250°C.

5. Procédé selon la revendication 3 ou la revendication 4, dans lequel le stannosilicate cristallin est traité par un acide.

6. Procédé selon l'une quelconque des revendications 3 à 5, dans lequel le stannosilicate cristallin est séché pour enlever l'eau qu'il contient.

7. Procédé pour enlever $H_2S$ d'un courant d'alimentation contenant $H_2S$ et des hydrocarbures et/ou $H_2S$ et de l'hydrogène d'un courant résultant d'opérations de raffinage pétrochimique, qui comprend la mise en contact du courant avec un stannosilicate cristallin de formule générale:

$xM_2O \cdot SnO_2 \cdot 4\pm0,5 SiO_2 \cdot y H_2O \cdot zR$

dabn laquelle x vaut 1,5 à 4; y vaut 4 à 15; R est une amine; et z vaut 0 à 4, ce stannosilicate cristallin étant selon la revendication 1 ou 2 ou étant produit par le procédé selon l'une quelconque des revendications 3 à 6, et la récupération d'un courant débarrassé de $H_2S$.

**8.** Procédé selon la revendication 7, conduit à des températures comprises entre environ 50° et environ 500° C.

**9.** Procédé selon la revendication 7 ou la revendication 8, dans lequel le stannosilicate est séché avant sa mise en contact avec le courant d'alimentation.

**10.** Procédé selon la revendication 9, dans lequel le stannosilicate est séché sur place ("in situ").

**11.** Procédé selon l'une quelconque des revendications 7 à 10, dans lequel le stannosilicate contenant $H_2S$ est régénéré par une purge par de l'hydrogène.

SODIUM STANNOSILICATES-DIFFRACTION PATTERNS

**Potassium Stannosilicate**
**(Phase G)**

**Cesium Stannosilicate**
**(Phase K)**

10.00    20.00    30.00    40.00    50.00    2Theta